# EUROPEAN PATENT APPLICATION

(11) **EP 1 022 453 A1**
(43) Date of publication of application: **26.07.2000**
(21) Application number: 00200203.8
(22) Date of filing: 19.01.2000
(51) Int. Cl.: F02G 1/043, F24D 12/00

(54) **System for combined generation of power and heat**

(30) Priority: 19.01.1999 NL 1011070
(71) Applicant: Trioflam B.V., 6716 AR Ede (NL)
(72) Inventor: Meijer, Willem, 7021 DV Zelhem (NL)
(74) Representative: Bartelds, Erik

(57) **Abstract**

The invention relates to a system for combined generation of power and heat, comprising a heating device, means connected to the heating device for converting the thereby generated heat into power, and means connected to the heating device for distributing the thereby generated heat. The converting means can herein comprise a hot-air motor having a closed working chamber and a liquid piston movable therein.

The system can be provided with an electric generator connected to the hot-air motor, while the distributing means can comprise a conduit connecting a source of cold tap water to one or more take-off points, or a closed circulation conduit filled with a heating liquid and a pump co-acting therewith.

The invention further relates to a hot-air motor intended for use in a system as described above.

## Description

The invention relates to a system for combined generation of power and heat, comprising at least one heating device, means connected to the or each heating device for distributing at least a part of the thereby generated heat, means connected to the or each heating device for converting at least a part of the thereby generated heat into power, which converting means comprise at least one hot-air motor and at least one electric generator connected thereto. Such a system is known, for instance from DE-A-4 308 888.

Power and heat have heretofore generally been generated and transported separately. Power in transportable form is usually generated at power stations, where fossil fuels are burned and the therein released energy is converted into electricity by means of a generator. This electricity can be transported easily and with relatively small losses to users, for instance industries, offices and households, by means of a cable network. Ultimately the electricity is usually used to power electrical appliances, but may also be used for heating.

Heat does not allow of such simple transport and is therefore usually generated at or close to the location where it is required. Heat is generally generated by burning fossil fuels, which are supplied for instance via a mains system. As stated however, heat can also be generated by converting electrical energy.

Because separate generation of heat and power requires two separate distribution networks, and the efficiency of the two separate generating processes is not very good either, systems have been developed with which heat and power can be generated simultaneously. Such combined heating and power stations are used for instance in industry, but are also used in district heating systems. Use is made herein of a steam or gas turbine to drive an electric generator and the residual heat of the steam from the turbine is used to heat for instance tap water or water for central heating installations. Although such combined heating and power stations have a relatively high generating efficiency, the distribution of the generated heat forms a problem. The laying of a pipe network with which heat can be transported over considerable distances and with small losses requires a large investment.

There therefore exists a need for a system for combined generation of heat and power which is suitable for generating comparatively small power outputs, which requires a small investment and little maintenance and which can thus be installed at the location where the heat and power will finally be used.

From the stated earlier publication DE-A-4 308 888 is already known a small heating and power station for domestic use, wherein use is made of the excess heat occurring in a central heating installation to drive a hot-air motor or stirling engine, which in turn drives an electric generator. Both heat and electricity are thus generated in a household.

The invention now has for its object to further simplify such a system and to make it substantially free of maintenance. In addition, the invention has for its object to provide a system of this type which has a higher than usual efficiency. A final objective of the invention is to make such a system suitable for operation on renewable forms of energy.

This is achieved according to the invention in that the or each hot-air motor has at least one closed working chamber with a liquid piston movable therein. Such a hot-air motor with liquid piston or "Fluidyne" has practically no moving parts and is therefore simple to manufacture, install and maintain.

In order to maximize the power of the hot-air motor, a working gas preferably circulates at a higher than atmospheric pressure in the working chamber of the or each hot-air motor. By increasing the working pressure of the gas, the pressure differences between the gas in the "hot" and "cold" leg of the hot-air motor increase in absolute value, whereby the supplied power also increases.

The pressure of the working gas preferably amounts to at least 1.5 bar, and more preferably at least 2 bar. A relatively great output can hereby be generated. Since the volume of the gas is inversely proportional to the working pressure, the pressure preferably even amounts to at least 5 bar, and more preferably at least 10 bar, so that it is possible to suffice with a relatively compact hot-air motor.

The heat generated by the system can be used to heat tap water and/or heating water. To this end the distributing means can comprise at least one conduit connecting a source of cold tap water to one or more take-off points in addition to at least one closed circulation conduit filled with a heating liquid and a pump co-acting therewith.

In order to make the system suitable for small-scale, for instance domestic use, the heating device preferably forms part of a domestic geyser or boiler.

As stated, the system can readily be made suitable for functioning on renewable energy sources, particularly through the use of a hot-air motor. According to a preferred embodiment the heating device comprises for this purpose at least one solar collector.

The invention also relates to a hot-air motor particularly intended for use in a system as described above. According to the invention such a hot-air motor has at least one closed working chamber with a liquid piston movable therein. Here also a working gas preferably circulates in the working chamber at a higher than atmospheric pressure of for instance more than 1.5 or 2 bar, and more preferably of more than 5 or 10 bar.

The invention will now be elucidated on the basis of a number of embodiments, wherein reference is made to the annexed drawing, in which:

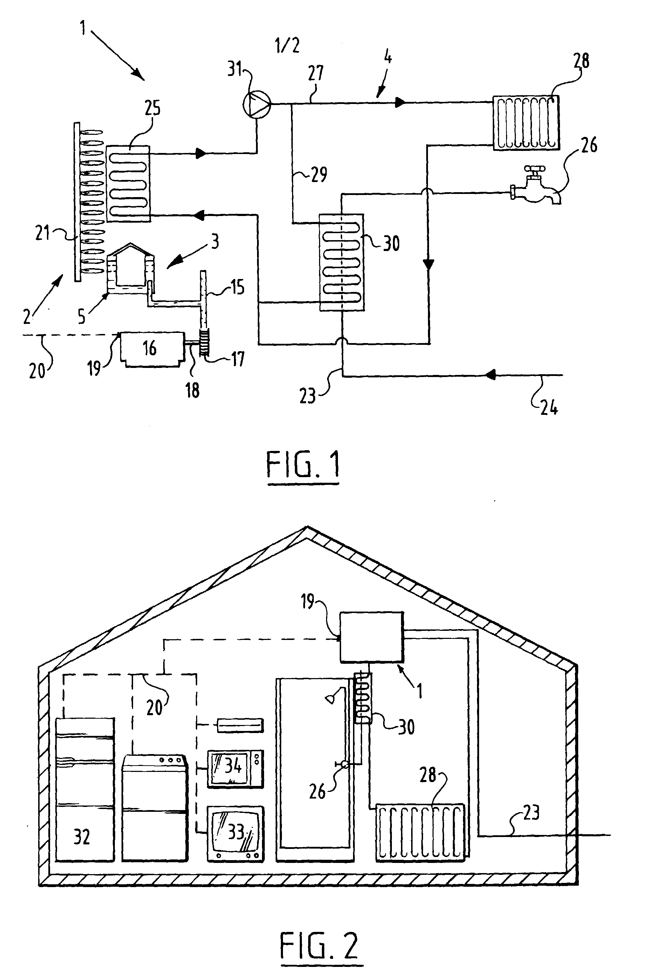

Fig. 1 shows a schematic view of the most important components of the system according to the invention,
Fig. 2 is a schematic view of a dwelling with the system of fig. 1 and a number of heat and/or power-consuming appliances,

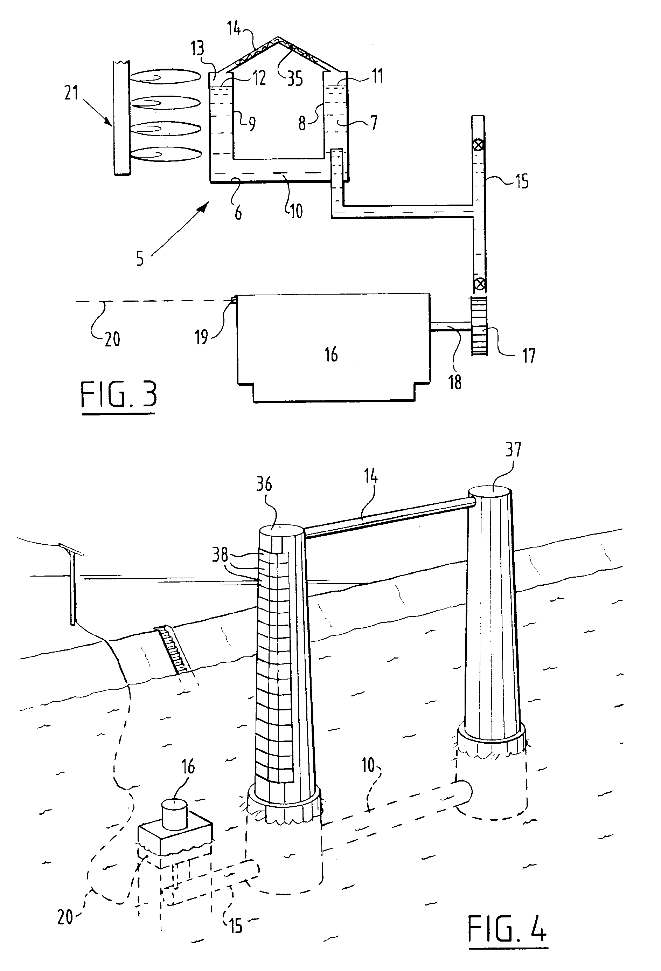

Fig. 3 shows on larger scale the hot-air motor and electric generator of the system of fig. 1, and
Fig. 4 is a schematic view of a large-scale embodiment of the system according to the invention with a heating device fuelled by solar energy.

A system 1 for combined generation of power and heat comprises a heating device 2, means 3 connected to heating device 2 for converting a part of the thereby generated heat into power, and means 4 likewise connected to heating device 2 for distributing a part of the thereby generated heat.

The converting means 3 herein comprise a hot-air motor or stirling engine 5. This motor, which can have one or more closed working chambers 6, is of the type in the shown embodiment with a liquid piston 7, a so-called "Fluidyne", movable in working chamber 6. Such a motor 5 has a "cold" leg 8 and a "hot" leg 9 which are in mutual liquid communication by means of a conduit 10. A part of the liquid forming piston 7 is located in both legs 8, 9. Situated above liquid levels 11, 12 in both legs 8, 9 is a quantity of gas 13 which can be under a higher than atmospheric pressure, as will be elucidated below.

By means of a conduit 14 the parts of legs 8, 9 lying above liquid levels 11, 12 are likewise in mutual connection, whereby gas 13 can flow freely from the "cold" to the "hot" leg, and vice versa. A regenerator 35, the operation of which is elucidated hereinbelow, can be arranged in this conduit 14. Hot-air motor 5 further comprises a working cylinder or leg 15 which is in liquid communication with the "cold" and "hot" leg 8, 9. This working leg 15 is further connected to an electric generator 16 driven by hot-air motor 5.

For this purpose generator 16 has an impeller 17 which can be set into movement by the liquid in working leg 15. This impeller 17 is arranged on an input shaft 18 of generator 16. Generator 16 further has a connection 19 connected to an electricity cable network 20 to which a number of electrical appliances can be connected, such as a refrigerator 32, television 33 or microwave oven 34.

The "hot" leg 9 of hot-air motor 5 is heated by heating device 2, which is formed in the shown embodiment by a burner 21 of a so-called combination boiler 22. This combination boiler is adapted to heat both tap water and heating water. To this end the distributing means 4 comprise a circulation conduit 27 in which flows a heating liquid, generally water. This circulation conduit 27 passes through a heat exchanger which is connected to burner 21 and in which the heating liquid is heated. This liquid flows therefrom to one or more heating radiators 28 through the action of a pump 31 connected to conduit 27. A part of the heating liquid is carried by a bypass line 29 through a heat exchanger 30 which serves to heat the tap water, to be discussed below.

Distributing means 4 also comprise a tap water conduit 23 through which cold tap water is supplied from a source 24, generally a water company connection, and guided along heat exchanger 30, wherefrom the heated tap water flows to one or more take-off points or taps 26.

The operation of the combined heat-power system 1 according to the invention is now as follows. When burner 21 of heating device 2 is switched on, the "hot" leg 9 of hot-air motor 5 is thereby heated, so that the gas 13 in that leg is heated and the pressure and volume thereof increase relative to the pressure and volume of the gas 13 in "cold" leg 8. Use is now made of these pressure and volume differences between the gas in the two legs 8, 9 when liquid piston 7 is set into movement.

If liquid piston 7 moves from "hot" leg 9 via conduit 10 to "cold" leg 8, the gas 13 is then urged via conduit 14 from "cold" leg 8 to "hot" leg 9. Because the temperature is higher in "hot" leg 9, the gas 13 will herein expand, whereby the total volume available for the liquid 17 in legs 8, 9 and conduit 10 decreases. Liquid 7 is thus displaced and will flow to the working leg 15 where the liquid level will therefore rise.

If liquid piston 7 then moves back again from the highest point (top dead point - TDP) in "cold" leg 8 to the "hot" leg, the gas 13 is then urged back again in opposing direction through conduit 14 to "cold" leg 8, where it contracts again as a result of the lower temperature. The volume available for liquid in the assembly of legs 8, 9 and conduit 10 thus increases again, so that liquid is drawn back out of working leg 15. However, because as a consequence of the lower pressure of the cooled gas the pressure in system 1 is at that moment lower than during the upstroke of the liquid in working leg 15, net work is produced during the up and downward movement of the liquid in working leg 15. This work is used in the shown embodiment to drive the impeller 17 of generator 16.

The output of the system can herein be increased by placing the gas under a higher than atmospheric pressure. The higher the absolute pressure of the gas 13, the greater the pressure differences are in absolute sense between the gas in the "cold" and the "hot" leg and therefore the higher the generated output. This results in it being possible to suffice with a smaller quantity of gas in order to generate a determined output, and a more compact hot-air motor can therefore be used. It must however be taken into account here that the surface area available for transferring heat to the gas 13 in the "hot" leg 9 then also becomes smaller. High demands are thus made on the heat-exchanging capacity of this leg 9 and burner 21 in order to guarantee that at each stroke of the motor the gas 13 in "hot" leg 9 is sufficiently heated.

In order to improve the efficiency of the system the heat generated by the gas during displacement from the "hot" to the "cold" leg is stored in regenerator 35. This latter can be formed by a collection of mesh grids, metal strips or a ceramic material with narrow passages, and functions as a heat buffer which retains the heat and relinquishes it again to the gas 13 when it flows from the "cold" to the "hot" leg again.

It is of course also important for the operation of system 1 that the temperature difference between the two legs 8, 9 is as great as possible. This entails in practice that the "cold" leg 8 will be cooled. This is not shown in the drawing however for the sake of clarity. In addition, in order to initiate and maintain the movement of liquid piston 17, and therewith of the liquid column in working leg 15, the volumes and lengths of the different legs 8, 9 and 15 have to be chosen precisely in relation to each other. The manner in which hot-air motor 5 can be adjusted or tuned is otherwise known to the skilled person and will therefore not be discussed further here.

For heating of "hot" leg 9 of motor 5 only a relatively small part of the heat of burner 21 will be required. The rest of the heat is therefore available to heat water, either for use as tap water or for heating spaces. The distribution of heat over motor 5 and heat exchanger 25, and therefore the ratio of generated power and heat, can be regulated. It is possible for instance through additional cooling of the "cold" leg 8 to suffice with less heating to generate the same output, whereby a larger part of the heat can be used as such. The "hot" leg 9 could also be displaceable relative to burner 21, whereby the degree of heat absorbed thereby can likewise be regulated; Another option is to adapt the gas and liquid volume in legs 8, 9 by draining or, conversely, replenishing the active part thereof.

Because the system 1 makes use of a hot-air motor 5, it is suitable for use with many types of energy. Instead of burner 21 a system of solar collectors could for instance be used to heat "hot" leg 9. Such a variant could also be applied on very large scale. Mutually connected columns 36, 37 placed for instance offshore can be envisaged here, one of which is covered along a large part of its height with solar collectors 38. The thereby generated heat could then be used as desired for instance for district heating or for heating the content of the column 36 in question, which then functions as "hot" leg of a hot-air motor, whereby the solar heat is once again converted into kinetic energy.

The system according to the invention thus enables with simple means the forming of an optionally small-scale combined heating and power station which can be used at many locations and which can operate on a large number of different forms of energy and has a minimum number of moving parts, whereby it is thus very cheap to manufacture and easy to install and maintain.

Although the invention is described above with reference to a number of embodiments, it is not limited thereto. Other variants of hot-air motors could thus be applied having more or differently formed working chambers. More motors could also be combined in one system. In addition, other energy sources can also be envisaged, such as for instance a heat pump. Finally, the described hot-air motor could also be used in other applications while retaining the advantages associated therewith. The scope of the invention is therefore defined solely by the following claims.

## Claims

1. System for combined generation of power and heat, comprising at least one heating device, means connected to the or each heating device for distributing at least a part of the thereby generated heat, means connected to the or each heating device for converting at least a part of the thereby generated heat into power, which converting means comprise at least one hot-air motor and at least one electric generator connected thereto, **characterized in that** the or each hot-air motor has at least one closed working chamber with a liquid piston movable therein.

2. System as claimed in claim 1, **characterized in that** a working gas circulates at a higher than atmospheric pressure in the working chamber of the or each hot-air motor.

3. System as claimed in claim 2, **characterized in that** the pressure of the working gas amounts to at least 1.5 bar, and preferably to at least 2 bar.

4. System as claimed in claim 3, **characterized in that** the pressure of the working gas amounts to at least 5 bar, and preferably to at least 10 bar.

5. System as claimed in any of the foregoing claims, **characterized in that** the distributing means comprise at least one conduit connecting a source of cold tap water to one or more take-off points.

6. System as claimed in any of the foregoing claims, **characterized in that** the distributing means comprise at least one closed circulation conduit filled with a heating liquid and a pump co-acting therewith.

7. System as claimed in any of the foregoing claims, **characterized in that** the heating device forms part of a geyser or boiler for domestic use.

8. System as claimed in any of the foregoing claims, **characterized in that** the heating device comprises at least one solar collector.

9. Hot-air motor, particularly for use in a system as claimed in any of the foregoing claims, **characterized by** at least one closed working chamber with a liquid piston movable therein.

10. Hot-air motor as claimed in claim 9, **characterized in that** a working gas circulates in the working chamber at a higher than atmospheric pressure.

11. Hot-air motor as claimed in claim 10, **characterized in that** the pressure of the working gas amounts to at least 1.5 bar, preferably at least 2 bar, more preferably at least 5 bar, and most preferably at least 10 bar.
